Europäisches Patentamt

European Patent Office

Office européen des brevets

(19)

(11) **EP 0 745 916 A1**

(12) **EUROPEAN PATENT APPLICATION**

(43) Date of publication:
04.12.1996 Bulletin 1996/49

(51) Int. Cl.$^6$: **G05B 13/02**

(21) Application number: 95108187.6

(22) Date of filing: 29.05.1995

(84) Designated Contracting States:
**AT BE DE FR GB NL**

(71) Applicant: **SIEMENS AKTIENGESELLSCHAFT**
**80333 München (DE)**

(72) Inventors:
• **Furumoto, Herbert**
  **D-91052 Erlangen (DE)**
• **Wheeler, Scott**
  **TW3 3SN Middx (GB)**

(54) **Method and device for controlling a technical process**

(57) The process variables are measured as data-sets, compared with historical data sets and/or computed to getting control parameters for process optimazation, whereby the data-sets are stored and only such data-sets are chosen, which fulfil the goal. In respect to the invention cases are stored as points in m-dimensional space. The device has a case-classifier, a working data base (WDB) and optionally in a historical data base (HDB), further a case-selector and a modeller.

*Figure 2*

EP 0 745 916 A1

## Description

The invention relates to a Method and device for controlling a technical process, especially batch processes, e. g. in the paper manufacturing industry.

In the unpublished european patent application No. 93 118 903.9 a device for controlling a technical process is proposed, which has a case generator, one or more databases for storing datas and a case selector. The measured values are compared with the stored datas, whereby through mathematical operations a comprimed data-set is generated. From latter data-sets control signals or advice for recommented process settings and expected results are derived.

Main object of this invention is to develop the proposed device with further features. Another object is to correlate the data compression method with a cost-function

The objects are verified by the invention claimed in the patent claims.

The best mode of the invention is described by an example with the figures. The example is chosen from the paper industry. But also in other processes the invention is to be realized.

## Short description of the drawings

FIG 1 shows the weighting function used in the new method,
FIG 2 shows the design of the new device,
FIG 3 shows a working plan used in Fig. 2,
FIG 4 to 7 show the method realizing data-sets of the paper industry.

**Firstly the TERMS USED in the example are explained:**

### Tag

A tag is a number associated with some process parameter, either a setpoint or a measured value. Values may be measured automatically or produced by manual input of laboratory data. Some of the measured values are quality parameters, which are used to define the desired operating conditions of the plant.

### Case

A case is a set of **tag** values for one aliquot of substance (a nominal wood chip in a pulping process, a fibre in a paper-making process) as it passes through the plant. The values of some tags may be marked as unknown, as some laboratory measurements are only taken occasionally.

### Complete case

A complete case has values defined for all the tags.

### Incomplete case

An incomplete case has the values of some of the tags recorded as unknown. This may be because they have not yet been measured, but which will be eventually (they may represent the results of a laboratory test carried out at monthly intervals), or possibly data which will never normally be defined, e.g. representing the reason for a client return

### Running case

A **running case** is an **incomplete case** for one aliquot of substance at some intermediate point in the process. Only some of the measured values are present at this time, and the user will require advice as to what setpoints to use for the remainder of the process. These new setpoints, and the remainder of the measured values will be added to the running case to make the complete case. No values already present in the running case will be altered in the complete case, as these values represent values which have alreadz been measured, hence are immutable.

### Case database

At its simplest, the case database is the set of all **cases** that have been observed for the plant. In more complex implementations, only representative cases are stored to improve search performance.

### Existing setpoints ≙ current values of free setpoints

When a running case is submitted to the system, and the user requires advice on the setpoints to use, the answer will be dependent on the current values of the setpoints. In a batch process, these will be the setpoints used in the previous batch. These setpoints do not form part of the running case, as they may still be changed.

### Cost function

Some of the **tags** in a **case** represent quantities which have a financial cost, e.g. steam consumption or starch usage. A cost function is defined in terms of these tags and of the production rate to give the cost per tonne of product for a particular case. This function may be a linear function of the tags (e.g. starch has a fixed price per tonne), or may be non-linear (the fuel used to generate steam may be derived from the raw material, hence "free" until so much steam is used that supplementary fuel much be bought).

### Condition

A condition is a range of permitted values for a quality parameter - it may be less than, greater than, or between stated values. Conditions are used to exclude certain cases from consideration in optimising the plant.

## Target value

A target value for a tag is an optimum point of operation. Cases where the actual value is not the same as the target value are never excluded from consideration for this reason alone: instead a **weighting** is applied in order to assign a numeric significance to the difference between the two values.

## Weight

When assessing the significance of the difference between two tag values, $x_1$ and $x_2$, a weighting function $w(x)$ is used. This takes account of some quality parameters being more important than others, and also of a unit change in one range of a single quality being more important than in another. In the general case $w(x)$ is non-linear, and different tags have different weighting functions. When a case is used, the raw tag values are mapped to the metric values, and only these are used for the calculations. The weighting function for any tag is monotonic, and may be defined either as a smooth curve, or as a series of line.segments approximating an ideal function.

## Metric distance

The metric distance between two known tag values $x_1$ and $x_2$ is defined in terms of the **weighting function** as being:

$$d = |w(x_1) - w(x_0)|$$

The metric distance between a target **incomplete case** definining values for different tags and a trial **case** is defined as the root sum of squares of the differences for the values and target values for each tag used. The target **incomplete case** will not define all possible tag values in the general case: in practice, the target values will usually only define values for certain **tags** associated with quality measurements. Tags which the target **incomplete case** does contains, but for which the trial case contains no values, may be treated in two ways: (a) a maximum separation is assumed, i.e. the missing value is assumed to be that value which would give the largest difference possible given the form of the **weighting function**; or (b) the case is simply rejected.

## Goal

A goal defines the required operating condition of the plant for optimisation. Three types of goal are defined:

1. "**Nearest goal**" - a goal of this kind consists of a set target values for **tags**. It also contains a set of conditions, but this set may be null. Cases which satisfy the **condition set** are ranked according to their **metric distance** from the target set. Selections are made only from the cases already observed in plant operation.

2. "**Cheapest goal**" - a goal of this kind conists only of a non-empty set of conditions. Cases which satisfy the condition set are ranked according to a **cost function** of the tag values. The cost function is defined independently of the **weighting**. Selections are made only from the cases already observed in plant operation.

3. "**New-case**" - goals of this kind are similar to either **Nearest** or **Cheapest**, but the cases to be produced in response are predicted cases, not cases actually observed. The system predicts that if the given setpoints are used, the stated quality measurements will result.

## HCI

The HCI (human computer interface) is the part of the software with which the user interacts, setting goals and receiving recommendations.

## Plant model matrix

This is a matrix of numbers which represents how one tag (e.g. a quality parameter) varies for unit change of another tag (e.g. a setpoint) in the region of the running case, together with the range over which this prediction is valid. In general, the relation between tags is very non-linear: the plant model matrix is related to the partial derivatives of the relations. As such, a different plant model matrix must be generated dynamically for any running case from a non-linear model, which may be represented by a technique such as a neural net.

## Case selector

The case selector is the software module which recommends a case (or its setpoints), on the basis of historical information, the running case, and the goal set by the user.

## Case-based learning

Case-based learning attempts to produce solutions for new-case targets, using the case database as a knowledge source. Classic CBL implements a learning cycle: a Planner produces a plan (corresponding to a solution or sequence of solutions to a new-case target). The plan is implemented (possibly by modelling, but usually in the real world), and the results compared with the required and predicted results. A Diagnostic system is used to determine the cause of any deviation from the expected performance, and this is used to revise the Planner's knowledge-base, which will have the effect of producing a revised plan at the next iteration.

**Afterwards THE DESIGN of the device is described:**

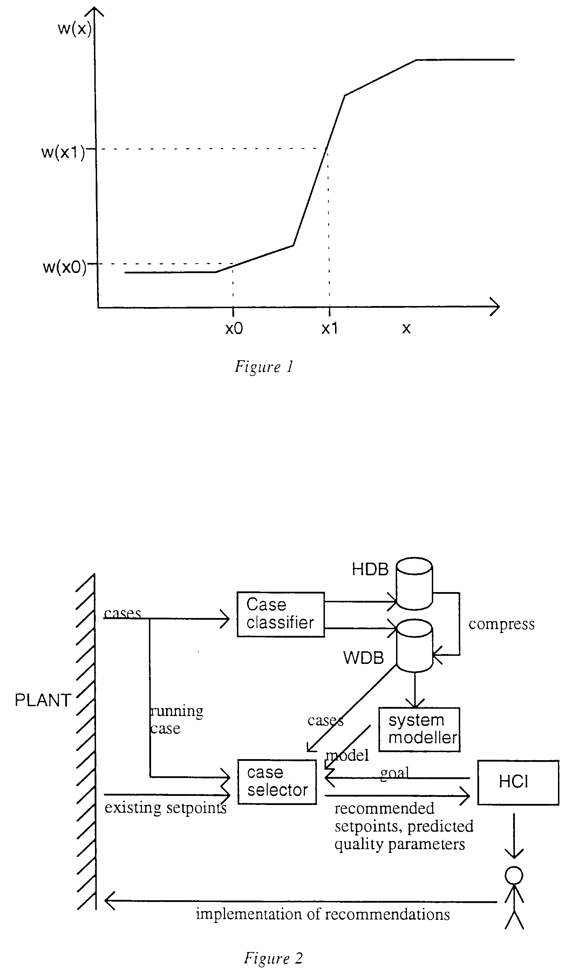

Figure 2 shows a general overview of the design. Cases are received from the plant interface. A software module (the Case Classifier) determines whether the case is within noise limits of previously observed cases, and if not, adds it to the two databases used by the system. The databases are (a) the historical database (HDB), which holds all the cases observed so far; and (b) the working database (WDB), which has compressed information about some of the previous cases. The WDB is used for efficiency during queries: a variant system can be implemented using just the HDB. A new WDB is produced by compressing the HDB, either at regular time intervals, when the size of the WDB passes a certain limit, or when triggered manually by the user.

The WDB is used to provide training data to a system modeller. This modeller may be implemented by neural nets or other means.

The Case Selector is the part of the system which recommends new settings. This module takes several inputs: (a) a goal; (b) the WDB; (c) a **plant model matrix** produced by the modeller which represents how one tag (e.g. a quality parameter) varies for unit change of another tag (e.g. a setpoint) in the region of the running case, together with the range over which this prediction is valid; (d) the running case; (e) the existing setpoints.

The Case Selector produces two outputs: (a) the recommended settings; (b) the quality parameters predicted if these settings are used. The recommended settings are implemented, in whole or part, by the user. They may also be implemeneted automatically by the system.

**Now the Differences from conventional implementations of case-based reasoning are given:**

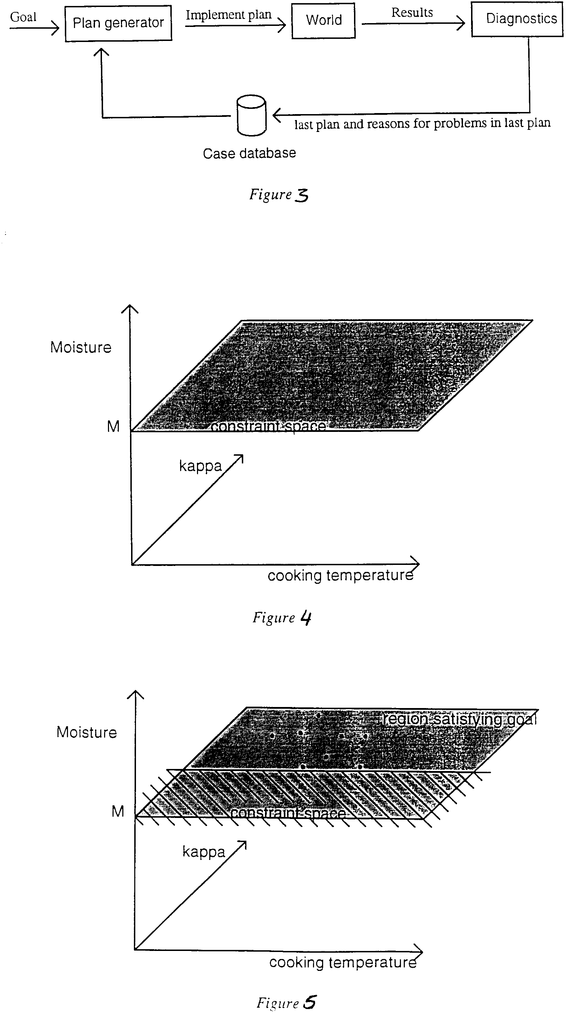

Classical CBL systems implement a cyclic approach to solving a problem like Figure 3. A goal is set, a Plan Generator generates a plan to achieve this goal, the plan is implemented. and the results are examined for success. If the goal has not been acheived, The plan and the results are stored in a case database (a case here consists of a plan and the corresponding results), and a diagnostics package identifies the reason for the failure. On the next iteration, the plan generator uses the case database to produce a plan avoiding all past problems. The process terminates when a working plan is found.

Classical CBL systems differ from this application in at least four important respects.

(1) Classically, the Plan Generator is free to generate any plan which it thinks may work: plans either work or fail to work, and the only consequence of failure is that the knowledge-base of the Plan Generator is updated to avoid that family of plans in future. A much more conservative approach is needed for this problem. Plans, i.e. sets of recommended setpoints, can succeed in improving the process, or they can fail, giving no improvement, or they can cause severe disruption to the process resulting in expensive failures including paper breaks. Operators have a strong reluctance to try any combinations of settings which are not very close to settings they have used before, as they will be held responsible for problems such as paper breaks - this solution should be similarly conservative in its recommendations. This requires some specific features in the Plan Generator to produce "conservative" plans, i.e. not differing greatly from the current settings.

(2) When the Plan Generator component of a classical CBR system produces a plan, the system will use exactly that plan. This is not realistic in industry - a "plan", i.e. a set of recommended setpoints, will probably require that the user make at least slight changes to all the setpoints currently in use. In practice a user will want to make only one or two changes at a time. Thus the Planner Revision component must cope with the evaluation of the plan that was actually executed, not the plan that was requested. However it is also desirable to produce plans that require the alteration of only one or two setpoints, and the Plan Generator will have this feature.

(3) A classical CBL attempts to solve a single problem, which is set repeatedly. For instance, in chemical engineering we may sometimes assume that the characteristics of the input chemicals used are consistent, so that a given set of process setpoints will always produce the same results. This is never the case for paper or pulp production, due to the variation in the wood stock or pulp quality. Thus we have to have to build the Plan Generator to recognise similarities in the problems it encounters, so that the results it had from one problem are used to generate the plan for another problem.

(4) A classical CBL relies on a diagnosis system which is used to decide why a plan failed. In the paper and pulp field, this is not straightforward - there is only incomplete knowledge of the system, so that explanations of a failure may not be forthcoming. The Plan Generator has to make decisions about what families of plans to reject on the basis of this incomplete information, while possibly being able to revise this decision in the light of future more accurate modelling information.

**The new Method is characterized by following:**

Under this method, the Plan Generator effort takes a **running case** consisting of an observation of the $n$ currently known values for the case under consideration (e.g. moisture, chip size etc.). This defines a constraint space of $n-m$ dimensions within the m-dimensional space representing the possible tag values ($m\sim200$ typ-

ically). Any proposed plan must, of course, lie in this constraint space. In Figure 4 we show this reduced to three dimensions, without loss of generality. The figure represents: (i) process measurement (chip moisture), which has already been made - a setpoint that has already had its effect would be equivalent; (ii) a setpoint (cooking temperature) which we are still free to alter in the plan; and (iii) a quality parameter (kappa) which will form part of the goal. Because the moisture has already been measured as M, we know that the eventual case when our new solution is implemented on the plant must include the value M, i.e. this value is no longer "free". This defines the constraint space, which in this case is the marked plane.

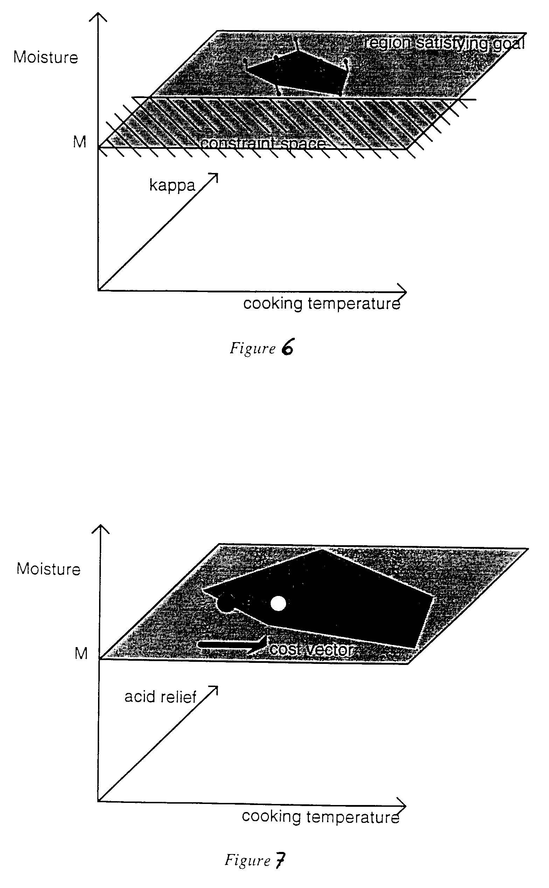

In practice our set of past **cases** will not contain any examples with exactly this value of moisture. A set of past complete cases which lie close to the constraint space are selected. These cases are selected to satisfy the quality **conditions** set by the user (typically inequalities such as $\kappa > 0.90$). In Figure 5 we show only a single quality condition, which excludes the shaded region, but in general there will be several such conditions in the goal.

The definition of "close" is critical to the success of the algorithm, and weighting of points according to separation can be used. However points which lie too far away will be rejected entirely - this is part of the system which will produce only "conservative" plans, i.e. ones requiring only small changes from known setpoints combinations.

These points are projected into the constraint space, with partial use of the predictive information of the diagnostic system. For instance, a case (a past observation) has a particular moisture value $M'$, which is close to but does not match the value $M$ recorded for the case under consideration. A new "fake" case is produced from the past case (for the purposes of this plan-generation only) by altering the value for moisture to be $M$. However the models of the diagnostic system show a linear relation of moisture with another parameter $kappa$, the value of which is revised from $K'$ to $K$. Naturally some estimation must be provided by the diagnostic system for the range over which this linear relation holds - if this is exceeded, the past case is excluded from the set under consideration.

Once these projections into the constraint space are complete, the system has defined a polytope in $n$ dimensions which bound a volume representing the previous observations. Figure 5 shows this for the example above. In this case, the cases (black dots) are projects down (or up) on to the plane representing the constrain space. Because changes in moisture have been observed to produce changes in kappa, the projection on to the plane is not vertical. The projected points define a bounding polytope (here it is a bounding polygon).

If it is assumed that: (a) the selection of "near" points was done conservatively; and (b) the linear relations between tag values given by the diagnostic models are correct; then any combination of tag values which lies within this polytope or on its boundary may be considered conservative, and (importantly) appear conservative to the operators, because it is either similar to cases that have already occurred, or is an interpolation between them.

This polytope does not constrain the system to just produce old cases (or rather the projections of old cases). One of the vertices of the polytope corresponds to the **nearest** complete case which can be produced given the current **running case**. Furthermore, any point within this polytope may be expected to satisfy the conditions on quality parameters which the operator has set.

If there is a substantial case database for the plant, the system may produce more than one case satisying the goal: any of the vertices of the polygon in the figure 6 would be permissible as recommendations to the operator. However they are not necessarily optimal for cost, or for satisfying operational constraints. It would we wished to recommend cases satisfying:

- Only $s$ setpoints may be changed from their current values (the value of $s$ will depend on the operator's preferences, but will typically be 1 or 2)
- Subject to the above, the best case is that which minimises the **cost function**

The selection of the recommended settings will be done by iterative linear programming using $s$ setpoints at a time to select the optimal settings. In practice, some setpoints will not be tried at this point for other pragmatic reasons - for instance the operator would probably not implement a recommendation which involved changing the speed of a paper machine. This is shown in Figure 7. Note that this figure does not use the same axes as before - kappa is not shown, and has been replaced by another setpoint. The white circle represents the current values of the setpoints for cooking temperature and acid relief (neither of which have yet had an effect). The arrows from this point indicate that it would alter the setpoints for either acid releif or cooking temperature, but not both. The choice is made by (conceptually) trying all permissible combinations of setpoints, and altering them so that the point produced lies on the boundary of the polytope. Of the resulting points, the one is chosen for which the quantity

(**Setpoint_value**[running_case] - **Setpoint_value**[historic_case]) .**Cost**[Setpoint]

is minimised: this selects the case which will minimise the running cost per unit of product while satisfying the quality goals. Here the result is shown as the black circle.

Use of this algorithm directly satisfies the "conservative" principle and the "minimum change" principle. The use of projected data solves (in practice, this problem occurs even with the Early Prototype). The algorithm also decouples the Plan Generator from the execution of the plan and the subsequent diagnosis of any failure, since the learning loop is closed by adding the observed complete case resulting from the plan (or the user's near implementation of it) to the case database, thus satisfying.

**Claims**

1.  Method for controlling a technical process, whereby the process variables are measured as data-sets and compared with stored data-sets and/oder computed for getting control parameters for process optimization, whereby the data-sets are stored in memories and such cases of data-sets are chosen, which fulfil a goal **characterized in that** the cases are stored in a m-dimensional space as a polytope, whereby only such data-sets which are lying on the surface of the polytope are used for getting control parameters.

2.  Method as claimed in claim 1, whereby said polytope is projected on a subspace of the m-dimensional space and that such cases are chosen, which are located on the boarder of the plane projection.

3.  Device for realizing the method of claim 1 or claim 2 containing

    -   a case-classifier for running cases, of which the datas are stored in a first data base, the working data base (WDB) and optionally in a second data base, the historical data base (HDB),
    -   a case selector, which choses special cases in respect to a data-modell from the second data base and derives control parameters to manage the goal with special quality and cost parameters
    -   a modeller for choosing the data-modell.

4.  Device as claimed to claim 3, whereby the case-classifier has means for changing some setpoints of the cases.

5.  Device as claimed in claim 3, where all means are directly assigned to the plant.

6.  Device as claimed in claim 4, whereby for verifying the goal, cost and/or the quality parameters a laboratory is assigned to the plant.

Figure 1

Figure 2

Goal → Plan generator → Implement plan → World → Results → Diagnostics

last plan and reasons for problems in last plan

Case database

Figure 3

Moisture

M

constraint space

kappa

cooking temperature

Figure 4

Moisture

region satisfying goal

M

constraint space

kappa

cooking temperature

Figure 5

*Figure 6*

*Figure 7*

## EP 0 745 916 A1

| | European Patent Office | **EUROPEAN SEARCH REPORT** | Application Number EP 95 10 8187 |

### DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| A | WO-A-93 04839 (ENGEL MASCHINENBAU GESELLSCHAFT) * page 5, line 15 - page 13, line 29 * --- | 1 | G05B13/02 |
| A | EP-A-0 364 090 (AMERICAN TELEPHONE AND TELEGRAPH COMPANY) * the whole document * ----- | 1 | |

| | |
|---|---|
| | TECHNICAL FIELDS SEARCHED (Int.Cl.6) |
| | G05B |

The present search report has been drawn up for all claims

| Place of search | Date of completion of the search | Examiner |
|---|---|---|
| THE HAGUE | 20 September 1995 | Kelperis, K |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.................................................................
& : member of the same patent family, corresponding document

EPO FORM 1503 03.82 (P04C01)